(19) Europäisches Patentamt
European Patent Office
Office européen des brevets

(11) Veröffentlichungsnummer: **0 390 743 A1**

(12) **EUROPÄISCHE PATENTANMELDUNG**

(21) Anmeldenummer: **90810235.3**

(22) Anmeldetag: **22.03.90**

(51) Int. Cl.[5]: **A01N 47/30, //(A01N47/30, 43:713,43:18,43:16,41:04)**

(30) Priorität: **31.03.89 CH 1182/89**

(43) Veröffentlichungstag der Anmeldung:
**03.10.90 Patentblatt 90/40**

(84) Benannte Vertragsstaaten:
**AT BE CH DE DK ES FR GB IT LI NL**

(71) Anmelder: **CIBA-GEIGY AG**
**Klybeckstrasse 141**
**CH-4002 Basel(CH)**

(72) Erfinder: **Alder, Alex, Dr.**
**Häglerstrasse 22**
**CH-4422 Arisdorf(CH)**
Erfinder: **Rindlisbacher, Alfred**
**Lachmattstrasse 69/3**
**CH-4132 Muttenz(CH)**
Erfinder: **Streibert,Hans-Peter**
**Brüelstrasse 15**
**CH-4312 Magden(CH)**
Erfinder: **Bänninger,Rudolf,Dr.**
**Hollenweg 6**
**CH-4107 Ettingen(CH)**

(54) **Schädlingsbekämpfungsmittel mit verbesserter Wirkung.**

(57) Durch gleichzeitigen Einsatz von Photosensibilisatoren kann die insektizide und akarizide Wirkung von N-Phenyl-thioharnstoffen sowohl verstärkt und verlängert werden als auch nach der Applikation innerhalb eines verkürzten Zeitraums herbeigeführt werden.

EP 0 390 743 A1

## Schädlingsbekämpfungsmittel mit verbesserter Wirkung

Die vorliegende Erfindung betrifft Verfahren zur Wirkungsverbesserung von insektizid und akarizid wirkenden N-Phenylthioharnstoffen durch Zusatz von Photosensibilisatoren. Ferner betrifft die Erfindung auch Schädlingsbekämpfungsmittel, welche als Wirkstoff einen insektizid und akarizid wirksamen N-Phenylthioharnstoff sowie einen Photosensibilisator enthalten.

Akarizide und Insektizide aus der Klasse der N-Phenylthioharnstoffe, bei welchen die schädlingsbekämpfende Wirkung mit dem erfindungsgemässen Verfahren verbessert werden kann, sind in der Literatur beschrieben worden. Beispielsweise werden solche Wirkstoffe in den US-Patenten 3,395,233 oder 4,404,225, der Europäischen Patentanmeldung 298915 oder den DE-Offenlegungsschriften 2639748 oder 3034905 beschrieben. Insbesondere die Wirkstoffe der DE-OS 3034905 haben sich in der Praxis als hochwirksame Akarizide und Insektizide gegen pflanzenschädigende Spinnmilben und Insekten erwiesen. Beim praktischen Einsatz dieser Wirkstoffe gegen Pflanzenschädlinge stellte sich heraus, dass der Eintritt der gewünschten Wirkung gegen Schadinsekten und -milben, erst mit einer gewissen zeitlichen Verzögerung nach der Anwendung beobachtet wird, und dass die Wirkung nach einer gewissen Zeit nachlässt, wodurch innerhalb einer Ernteperiode mehrere Behandlungen notwendig werden.

Ziel der vorliegenden Erfindung ist es daher, den Zeitraum zwischen Wirkstoffanwendung und dem Eintritt der pestiziden Wirkung zu verkürzen und die Wirkungsdauer des ausgebrachten Wirkstoffs zu verlängern sowie die Aufwandmenge an Wirkstoff zu vermindern.

Es wird deshalb erfindungsgemäss vorgeschlagen, die insektizide und akarizide Wirkung von N-Phenylthioharnstoffen schneller herbeizuführen und zu verlängern, indem man den N-Phenylthioharnstoff gemeinsam mit einem Photosensibilisator zu Anwendung bringt.

In einer bevorzugten Anwendungsform der vorliegenden Erfindung wird durch die Beifügung von Photosensibilisatoren die Wirkung bei solchen Wirkstoffen verbessert, die der Formel I

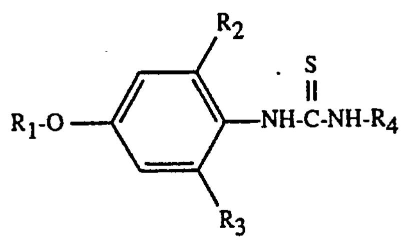

(I)

gehorchen, worin

$R_1$ Phenyl, Pyridyl oder durch ein oder zwei Substituenten aus der Gruppe Halogen, $C_1$-$C_4$-Alkyl, Trifluormethyl oder Nitro substituiertes Phenyl oder Pyridyl,

$R_2$ und $R_3$ unabhängig voneinander $C_1$-$C_4$-Alkyl und

$R_4$ $C_1$-$C_{10}$-Alkyl, $C_3$-$C_5$-Alkenyl, $C_3$-$C_6$-Cycloalkyl oder $C_3$-$C_6$-Cycloalkyl-$C_1$-$C_4$-alkyl bedeuten.

Als Photosensibilisatoren eignen sich beispielsweise aromatische Carbonylverbindungen und/oder verschiedene organische Farbstoffe. Als Beispiele solcher Sensibilisatoren seien Verbindungen aus den Verbindungsklassen der Xanthenfarbstoffe (zum Beispiel Bengalrosa), Thiazine (zum Beispiel Methylenblau), Porphyrine (zum Beispiel Tetraphenylporphyrin), Thionine, Eosine, Erythrosine, Phenosafranine, Chlorophylle, Flavine, Thioxanthone, Phthalocyanine, Thiophene, Napthalinderivate, Phenothiazine, Pyrazolanthrone, Ketocumarine, Azine (wie Riboflavin), Anthrachinone, Metallozene, Benzophenone und Anthracenderivate genannt. In besonderer Weise haben sich solche Photosensibilisatoren für die erfindungsgemässe Anwendung als geeignet erwiesen, die in der Literatur als Singlett-Sauerstoff-Sensibilisatoren beschrieben werden. Hiervon haben sich zur Verwendung im Zusammenhang mit den Verbindungen der obigen Formel I als besonders günstig die Xanthenfarbstoffe, Thioxanthone, Anthrachinone und Phthalocyanine herausgestellt. Als bevorzugte Einzelsubstanz aus diesen Klassen sollen genannt werden:

3′,4′,5′,6′-Tetrachlor-2,4,5,7-tetrajodfluorescein-Dinatriumsalz (Bengalrosa) der Formel II

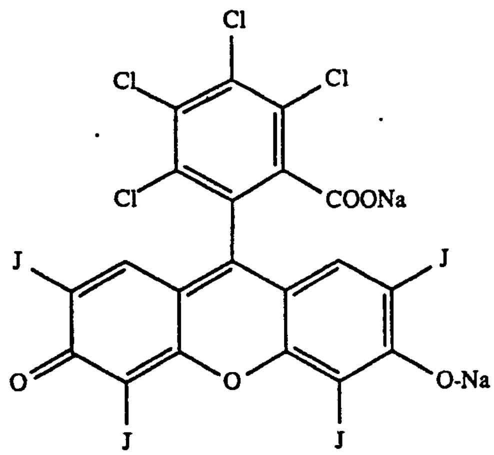

(II),

Aluminium-phthalocyanin-sulfonsäure-Natriumsalze der Formel III

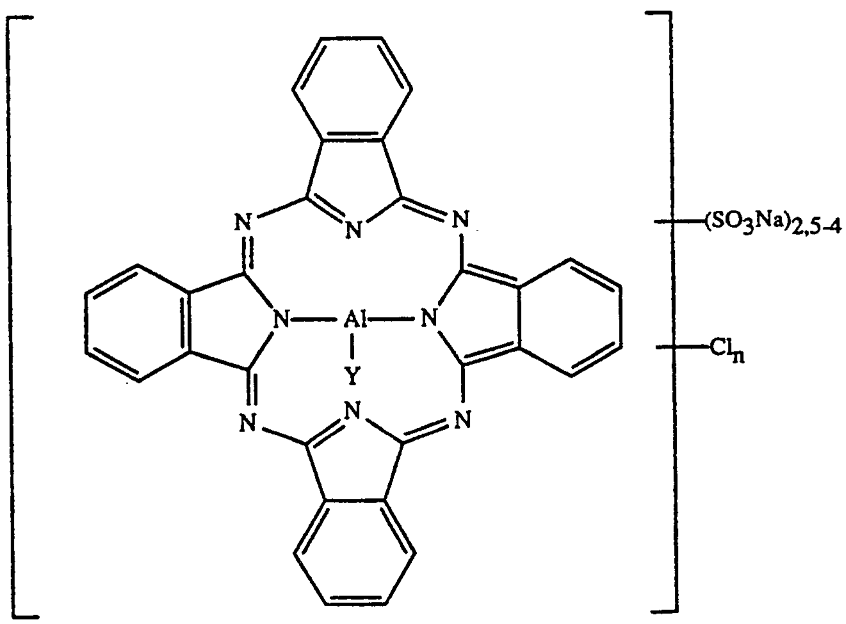

(III),

mit einem Sulfonierungsgrad von 2,5 bis 4, worin n null oder eins und Y Hydroxy oder Halogen bedeutet; bevorzugt sind die Verbindungen der Formel III worin Y für Hydroxy steht. Diese Verbindungen werden im weiteren als Verbindung 3a (Y = OH, n = 0 oder 1) und Verbindung 3b (Y = Cl, n = 0 oder 1) bezeichnet.

1-Amino-4-bromanthrachinon-2-sulfonsäure-Natriumsalz der Formel IV

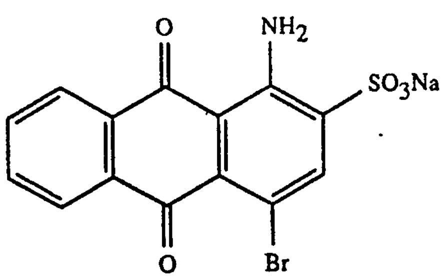

(IV) und

Thioxanthon-1-carbonsäure-nonaäthylenglykolester der Formel V

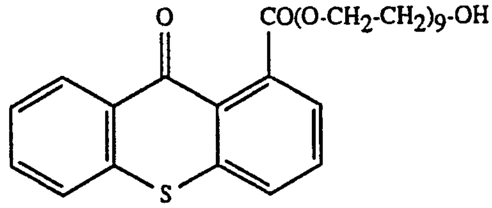

(V).

Die Definitionen der Substituenten der Verbindungen der Formel I unfassen eine enge Auswahl der bekannten Insektizide und Akarizide aus der Klasse der N-Phenylthioharnstoffe. Die verwendeten Definitionen der Substituenten stehen beispielsweise für die folgenden Reste:

Halogen für Fluor, Chlor, Brom oder Jod, vorzugsweise für Fluor oder Chlor,

$C_1$-$C_4$-Alkyl für Methyl, Aethyl, n-Propyl, Isopropyl, n-Butyl, sek-Buryl, Isobutyl oder tert.Butyl,

Pyridyl je nach der Verknüpfungsstelle an das bindende Sauerstoffatom für 2-Pyridyl, 3-Pyridyl oder 4-Pyridyl,

substituiertes Pyridyl für zum Beispiel Halogenpyridyl, Dihalogenpyridyl, Trifluormethylpyridyl, Halogentrifluormethylpyridyl, wie 3,5-Dichlorpyridyl, 5-Chlor-3-fluorpyridyl, 5-Trifluormethylpyridyl, 3-Chlor-5-trifluormethylpyridyl und ähnliche,

substituiertes Phenyl für beispielsweise Halogenphenyl, Alkylphenyl, Dihalogenphenyl, Trifluormethylphenyl und ähnliche,

$C_1$-$C_{10}$-Alkyl für isomere geradkettige und verzweigte Alkylketten, welche bei der angegebenen Zahl von Kohlenstoffatomen möglich sind, vorzugsweise bei $R_4$ für verzweigte Alkylreste,

$C_3$-$C_5$-Alkenyl für Allyl, Methallyl, 2-Butenyl, 3-Butenyl und isomere 2- und 3-Pentenyl,

$C_3$-$C_6$-Cycloalkyl vorzugsweise für Cyclopropyl oder Cyclohexyl,

Cycloalkyl-alkyl vorzugsweise für Cyclopropyläthyl oder Cyclohexyläthyl, insbesondere aber 1-Cyclopropyläthyl.

Unter die Formel I fallen beispielsweise die Wirkstoffe der angeschlossenen Tabelle I.

Tabelle 1:

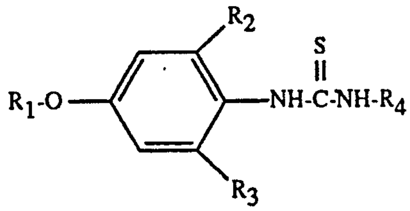

| Verb. Nr. | $R_1$ | $R_2$ | $R_3$ | $R_4$ | phys. Daten |
|---|---|---|---|---|---|
| 1a | $C_6H_5$ | $C_3H_7$-i | $C_3H_7$-i | $C_4H_9$-t | Smp. 149,6°C |
| 1b | 4-Cl-$C_6H_4$- | $C_3H_7$-i | $C_3H_7$-i | $C_4H_9$-t | Smp. 146-148°C |
| 1c | 3-$CF_3$-$C_6H_4$- | $C_3H_7$-i | $C_3H_7$-i | $C_4H_9$-t | Smp. 83- 85°C |
| 1d | 4-Cl-$C_6H_4$- | $C_2H_5$ | $C_4H_9$-s | $C_4H_9$-t | Smp. 91- 92°C |
| 1e | 4-Cl-$C_6H_4$- | $C_2H_5$ | $C_3H_7$-i | $C_4H_9$-t | Smp. 127-129°C |
| 1f | 4-$CH_3$-$C_6H_4$- | $C_3H_7$-i | $C_3H_7$-i | $C_4H_9$-t | Smp. 168-170°C |
| 1g | 4-$CH_3$-$C_6H_4$- | $C_3H_7$-i | $C_3H_7$-i | $C_3H_7$-i | Smp. 146-147°C |
| 1h | $C_6H_5$ | $C_3H_7$-i | $C_3H_7$-i | $CH_3$ | Smp. 130-131°C |
| 1i | $C_6H_5$ | $C_3H_7$-i | $C_3H_7$-i | $C_2H_5$ | Smp. 148-149°C |
| 1j | $C_6H_5$ | $C_3H_7$-i | $C_3H_7$-i | $C_3H_7$-n | Smp. 121-122°C |
| 1k | $C_6H_5$ | $C_3H_7$-i | $C_3H_7$-i | $C_3H_7$-i | Smp. 160-161°C |
| 1l | $C_6H_5$ | $C_3H_7$-i | $C_3H_7$-i | $C_4H_9$-n | Smp. 117-119°C |
| 1m | $C_6H_5$ | $C_3H_7$-i | $C_3H_7$-i | $C_4H_9$-i | Smp. 152-153°C |
| 1n | $C_6H_5$ | $C_3H_7$-i | $C_3H_7$-i | $C_4H_9$-s | Smp. 157-158°C |
| 1o | $C_6H_5$ | $C_3H_7$-i | $C_3H_7$-i | $C_5H_{11}$-n | Smp. 121-122°C |
| 1p | 4-$CH_3$-$C_6H_4$- | $C_3H_7$-i | $C_3H_7$-i | $C_4H_9$-s | Smp. 156-157°C |
| 1q | 4-Cl-$C_6H_4$- | $C_3H_7$-i | $C_3H_7$-i | $C_3H_5$-cycl. | Smp. 143-145°C |
| 1r | 4-Cl-$C_6H_4$- | $C_2H_5$ | $C_3H_7$-i | $C_3H_5$-cycl. | Smp. 80- 95°C |
| 1s | 4-Cl-$C_6H_4$- | $C_2H_5$ | $C_4H_9$-s | $CH_3$ | Smp. 109-110°C |
| 1t | $C_6H_5$ | $C_2H_5$ | $C_4H_9$-s | $C_3H_7$-i | Smp. 107-110°C |
| 1u | $C_6H_5$ | $C_2H_5$ | $C_4H_9$-s | $C_4H_9$-t | Smp. 97-100°C |
| 1v | 3-Cl-4-Cl-$C_6H_3$- | $C_3H_7$-i | $C_3H_7$-i | $C_4H_9$-t | |
| 1w | $C_6H_5$ | $C_3H_7$-i | $C_3H_7$-i | $C_{10}H_{21}$-n | |
| 1x | $C_6H_5$ | $C_3H_7$-i | $C_3H_7$-i | $C_7H_{15}$-n | |
| 1y | 4-$NO_2$-$C_6H_4$- | $C_3H_7$-i | $C_3H_7$-i | $C_4H_9$-t | |
| 1z | 4-$CF_3$-$C_6H_4$- | $C_3H_7$-i | $C_3H_7$-i | $C_4H_9$-t | |

Tabelle 1: (Fortsetzung)

| Verb. Nr. | $R_1$ | $R_2$ | $R_3$ | $R_4$ | phys. Daten |
|---|---|---|---|---|---|
| 1aa | 4-Cl-5-Cl-pyridyl-2 | $C_2H_5$ | $C_2H_5$ | $C_4H_9$-t | Smp. 140°C (Zers.) |
| 1bb | 4-Cl-5-Cl-pyridyl-2 | $C_3H_9$-i | $C_3H_7$-i | $C_4H_9$-t | Smp. 154°C (Zers.) |
| 1cc | 4-Cl-5-Cl-pyridyl-2 | $C_3H_9$-i | $C_3H_7$-i | $C_3H_7$-i | Smp. 167-169°C |
| 1dd | 4-Cl-5-Cl-pyridyl-2 | $C_3H_9$-i | $C_3H_7$-i | $C_5H_9$-cycl. | Smp. 172-174°C |
| 1ee | 4-Cl-5-Cl-pyridyl-2 | $C_3H_9$-i | $C_3H_7$-i | $C_4H_9$-s | Smp. 134-136°C |
| 1ff | 4-Cl-5-Cl-pyridyl-2 | $C_3H_9$-i | $C_3H_7$-i | $C(CH_3)$-$C_2H_5$ | Smp. 142-143°C |
| 1gg | 4-Cl-5-Cl-pyridyl-2 | $C_3H_9$-i | $C_3H_7$-i | $CH_3$ | Smp. 127-129°C |
| 1hh | 4-Cl-5-Cl-pyridyl-2 | $CH_3$ | $CH_3$ | $C_4H_9$-t | Smp. 147°C (Zers.) |
| 1ii | 4-Cl-5-Cl-pyridyl-2 | $C_2H_5$ | $C_4H_9$-s | $C_4H_9$-t | Smp. 127-129°C |
| 1jj | 4-Cl-5-Cl-pyridyl-2 | $C_3H_7$-i | $C_3H_7$-i | $C_3H_5$-cycl. | Smp. 147-150°C |
| 1kk | 4-Cl-5-Cl-pyridyl-2 | $C_3H_7$-i | $C_3H_7$-i | $C_6H_{11}$-cycl. | Smp. 174-177°C |
| 1ll | 4-Cl-5-Cl-pyridyl-2 | $C_3H_7$-i | $C_3H_7$-i | $CH(CH_3)$-$C_4H_9$-i | Smp. 131-133°C |
| 1mm | 4-Cl-5-Cl-pyridyl-2 | $C_3H_7$-i | $C_3H_7$-i | $CH(CH_3)$-$C_3H_5$-cycl. | Smp. 138-140°C |
| 1nn | 4-F-5-Cl-pyridyl-2 | $C_3H_7$-i | $C_3H_7$-i | $C_4H_9$-t | Smp. 115-116°C |

Bevorzugte Verbindungen der Formel I, die im erfindungsgemässen Verfahren in ihrer pestiziden Wirkung verbessert werden können, sind diejenigen, worin $R_1$ für Phenyl oder einfach durch Halogen, $C_1$-$C_4$-Alkyl oder Trifluormethyl substituiertes Phenyl und $R_2$, $R_3$ und $R_4$ für $C_1$-$C_4$-Alkyl stehen. Als bevorzugte Einzelverbindung ist N-(2,6-Diisopropyl-4-phenoxyphenyl)-N′-tert-butyl-thioharnstoff zu nennen (Verbindung 1a).

Das erfindungsgemässe Verfahren ist in einer bevorzugten Ausführungsform im wesentlichen dadurch charakterisiert, dass der Wirkstoff der Formel I und der Photosensibilisator der Formeln II, III, IV oder V am gleichen Ort, im allgemeinen auf der Kulturfläche oder Kulturpflanze, angewendet werden. Hierbei kann man diese beiden Komponenten gemeinsam und gleichzeitig oder nacheinander auf den Wirkungsort applizieren. Aus ökonomischen Gründen wird der Wirkstoff der Formel I und der Photosensibilisator im allgemeinen gleichzeitig, entweder als Tankmischung bestehend aus Wirkstoffdispersion der Formel I und Photosensibilisator, oder in Form eines gemeinsam formulierten Mittels auf den Anwendungsort ausgebracht. Da die Wirkstoffe der Formel I vorzugsweise zur Bekämpfung von pflanzenschädigenden Insekten und Akarinen eingesetzt werden, kommt das erfindungsgemässe Verfahren mit Vorteil auf den behandelten Kulturpflanzen, wie Baumwolle, Zierpflanzen, Obst, Zitrus oder Gemüse zur Anwendung. Die Applikation erfolgt dabei in üblicher Weise, indem man die Wirkstoffe in Form einer wässrigen Suspension gewünschter Konzentration auf die behandelten Kulturpflanzen versprüht.

Die Anwendungskonzentrationen bezogen auf die pestiziden Wirkstoffe der Klasse der N-Phenylthioharnstoffe beträgt im erfindungsgemässen Verfahren zwischen 0,1 und 1000 ppm, vorzugsweise zwischen 5 und 500 ppm, insbesondere zwischen 10 und 400 ppm. Der Photosensibilisator wird der Aktivstoffsuspension enthaltend den pestiziden N-Phenylthioharnstoff in Konzentrationen zwischen 0,01 und 50 Mol-% bezogen auf die Menge Aktivstoff beigefügt. Vorzugsweise beträgt der Zusatz an Photosensibilisator zwischen 0,1 und 10 Mol-%, insbesondere zwischen 1 und 5 Mol-%. Die Aufwandmenge der pestiziden Wirksubstanz beträgt bei der Schädlingsbekämpfung auf Kulturpflanzen zwischen 0,1 und 1000 g/ha, vorzugsweise zwischen 5 und 500 g/ha, insbesondere aber zwischen 10 und 400 g/ha.

Der erfindungsgemässe Zusatz eines Photosensibilisators zu den pestiziden Wirkstoffen der Klasse der N-Phenylthioharnstoffe bewirkt gegenüber dem Einsatz der Thioharnstoffe allein, eine Wirkungsverbesserung in drei Aspekten:

Erstens wird ein schnellerer Eintritt der pestiziden Wirkung nach der Applikation erreicht, das heisst, der Zeitraum zwischen dem Ausbringen des Wirkstoffs und dem Einsetzen der pestiziden Wirkung wird durch den Zusatz eines Photosensibilisators deutlich verkürzt.

Zweitens wird eine Verlängerung der Wirkungsdauer der pestiziden Wirkung nach der Applikation beobachtet, wodurch die Zahl der Wiederholungsbehandlungen der behandelten Kulturpflanzen während einer Vegetationsperiode verkleinert werden kann.

Drittens wird eine Verstärkung der pestiziden Wirkung bei niedrigen Konzentrationen des pestiziden N-Phenylthioharnstoffs festgestellt. So kann auch noch bei niedrigen Konzentrationen des pestiziden Wirkstoffs, wo dieser nur noch eine teilweise Bekämpfung des Schädlingsbefalls zulässt, die Wirkung auf die Schädlinge durch Zusatz eines Photosensibilisators verstärkt werden.

Diese wirkungsverstärkenden und wirkungsverlängernden Effekte treten zusätzlich zur Verkürzung des Zeitraums bis zum Wirkungseintritt bei der Verwendung der erfindungsgemässen Lehre ein. Sie erlauben aber die Herabsetzung der Aufwandmenge an insektizidem und akarizidem Wirkstoff bei gleichzeitiger Wirkungsverlängerung, was aus ökologischen und ökonomischen Gesichtspunkten für wünschenswert erachtet wird.

Von besonderem Vorteil hat sich der Zusatz eines Photosensibilisators für den Fall erwiesen, dass der pestizide Aktivstoff der Klasse der N-Phenylthioharnstoffe in Form einer Spritzpulverformulierung oder einer Flowable-Formulierung vorliegt. Diese Formulierungen zeichnen sich durch das Vorliegen von ungelöstem pestizidem Aktivstoff und gegebenenfalls von festen, wasserunlöslichen Trägermaterialien aus. Gemäss vorliegendem erfindungsgemässem Verfahren eingesetzte Wirkstoffsuspensionen werden mit Vorteil aus in Wasser dispergierbaren Pulvern oder Suspensionskonzentraten des fein gemahlenen Aktivstoffs aus der Klasse der N-Phenylthioharnstoffe hergestellt, worin die mittlere Korngrösse des Aktivstoffes zwischen 2 µm und 8 µm, vorzugsweise zwischen 2 µm und 5 µm liegt. Solche Dispersionen erhält man, indem man den Aktivstoff bis auf die gewünschte Korngrösse mahlt und dann mit geeigneten Formulierungshilfsstoffen, wie Trägerstoffen und/oder oberflächenaktiven Hilfsmitteln formuliert. Gebrauchsfähige, zum Verdünnen mit Wasser geeigneten Spritzpulver und Suspensionskonzentrate enthalten zwischen 1 und 75 Gewichts-% des pestiziden Wirkstoffs. Diese Konzentrate werden zum Zwecke der Anwendung mit Wasser bis auf die gewünschte Spritzbrühenkonzentration verdünnt. Sodann kann diesen Suspensionen die gewünschte Menge an Photosensibilisator beigegeben werden. Auf diese Weise erhält man sogenannte Tankmischungen.

Wegen der besonders günstigen erzielten biologischen Wirkung sollen als bevorzugte Wirkstoffkombinationen zur Durchführung des erfindungsgemässen Verfahrens die Kombination von Verbindung 1a mit den Photosensibilisatoren der Formeln II oder III herausgehoben werden.

Bisher konnten die besten biologischen Resultate mit dem erfindungsgemässen Verfahren erzielt werden, wenn man den N-(2,6-Diisopropyl-4-phenoxy-phenyl)-N′-tert.butyl-thioharnstoff in Form eines in Wasser suspendierten Spritzpulvers oder Suspensionskonzentrates, das den Wirkstoff in mittleren Korngrössen zwischen 2 µm und 8 µm enthält, und welchem der Photosensibilisator 3′,4′,5′,6′-Tetrachlor-2,4,5,7-tetrajodfluorescerin-Dinatriumsalz oder Hydroxyaluminium-phthalocyanin-sulfonsäure-Natriumsalz (Verbindung 3a) in einer Menge von 0,1 bis 10 Mol-%, bezogen auf die Menge des aktiven Thioharnstoffs, beigefügt worden ist, appliziert.

Zur Erhöhung der Anwendungssicherheit ist es wünschenswert, den pestizid wirksamen N-Phenylthioharnstoff und den erfindungsgemäss einzusetzenden Photosensibilisator in einer gemeinsamen Formulierung für den Anwender bereitzustellen, damit aus einem so formulierten Mittel durch einfaches Dispergieren in Wasser eine anwendungsbereite Spritzbrühe erhalten werden kann. Mittel, welche sowohl den pestiziden Wirkstoff der Klasse der N-Phenylthioharnstoffe als auch einen Photosensibilisator enthalten, bilden einen Gegenstand der vorliegenden Erfindung.

Erfindungsgemässe insektizide und akarizide Mittel mit verbesserter Wirkung sind dadurch gekennzeichnet, dass sie neben einem geeigneten wasserunlöslichen Trägermaterial und/oder Zuschlagsstoff als Wirkstoffe einerseits einen insektizid und akarizid wirkenden N-Phenylthioharnstoff und andererseits einen Photosensibilisator enthalten.

In der Regel beträgt bei derartigen Mitteln die Summe der N-Phenylthioharnstoffkomponente und der Photosensibilisatorkomponenten insgesamt nicht mehr als 75 Gewichts-%. Der Anteil des Photosensibilisators beträgt im allgemeinen 0,01 bis 50 Mol-% bezogen auf den Anteil des pestiziden Wirkstoffs. Handelsfähige Mittel gemäss der vorliegenden Erfindung enthalten in der Regel nicht weniger als 1 Gewichts-% der Kombination von Pestizidwirkstoff und Photosensibilisator und liegen als Spritzpulver-Formulierungen oder Flowable-Formulierungen vor. Die Korngrössen der eingesetzten Mischung von

Pestizid und Photosensibilisator wird üblicherweise vor dem Zusatz von Formulierungshilfsstoffen wie wasserunlöslichen Trägermaterials und oberflächenaktiver Substanzen auf mittlere Durchmesser von 2 µm bis 8 µm, vorzugsweise 2 µm bis 5 µm, herabgesetzt, indem man diese Stoffe in einer geeigneten Mühle mahlt.

Erfindungsgemässe Mittel mit verbesserter Wirkung werden nach in der Formulierungstechnik üblichen Verfahren hergestellt, indem man entweder beispielsweise auf mittlere Korngrössen von 2 µm bis 8 µm gemahlenes Gemisch aus einem Pestizid der Klasse der N-Phenylthioharnstoffe und Photosensibilisator durch inniges Vermischen und/oder Vermahlen mit wasserunlöslichen Trägermaterialien oder/und oberflächenaktiven Substanzen (Tensiden) homogenisiert oder indem man auf Korngrössen von 2 µm bis 8 µm vorgemahlenes Pestizid mit der gewünschten Menge am Photosensibilisator vermischt. Dabei kann der Photosensibilisator sowohl in Form eines kristallinen Feststoffs als auch in Form einer wässrigen Lösung eingesetzt werden. Für die Herstellung von Spritzpulvern wird vorzugsweise pulverförmiger Photosensibilisator verwendet, während bei der Herstellung von Suspensionskonzentraten wässrige Lösungen des Photosensibilisators oder pulverförmiger Photosensibilisator verwendet werden. Suspensionskonzentrate (Flowables) können schon auf dieser Stufe mit einer geringen Menge Wasser versetzt werden.

Bevorzugte erfindungsgemässe Mittel enthalten neben dem Photosensibilisator als Wirkstoff einen insektizid und akarizid wirkenden N-Phenylthioharnstoff der Formel I

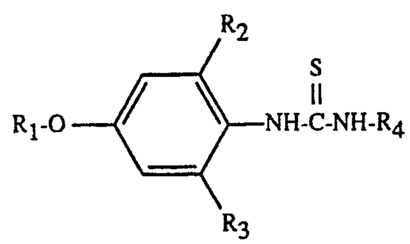

(I)

worin

$R_1$ Phenyl, Pyridyl oder durch ein oder zwei Substituenten aus der Gruppe Halogen, $C_1$-$C_4$-Alkyl, Trifluormethyl oder Nitro substituiertes Phenyl oder Pyridyl,

$R_2$ und $R_3$ unabhängig voneinander $C_1$-$C_4$-Alkyl und

$R_4$ $C_1$-$C_{10}$-Alkyl, $C_3$-$C_5$-Alkenyl, $C_3$-$C_6$-Cycloalkyl oder $C_3$-$C_6$-cycloalkyl-$C_1$-$C_4$-alkyl bedeuten.

Weiter bevorzugt sind solche Mittel, in denen $R_1$ für Phenyl oder einfach durch Halogen, $C_1$-$C_4$-Alkyl oder Trifluormethyl substituiertes Phenyl und $R_2$, $R_3$ und $R_4$ für $C_1$-$C_4$-Alkyl stehen.

Ganz besonders bevorzugt sind solche Mittel, die als insektiziden und akariziden Wirkstoff die Verbindung N-(2,6-Diisopropyl-4-phenoxyphenyl)-N′-tert.butyl-thioharnstoff enthalten.

Als Photosensibilisatoren finden in den erfindungsgemässen Mitteln Verbindungen aus den Verbindungsklassen der Xanthenfarbstoffe wie Bengalrosa, Thiazine wie Methylenblau, Porphyrine, Thionine, Eosine, Erythrosine, Phenosafranine, Chlorophylle, Flavine, Thioxanthone, Phthalocyanine, Thiophene, Naphthalinderivate, Phenothiazine, Pyrazolanthrone, Ketocumarine, Azine wie Riboflavine, Anthrachinone, Metallozene, Benzophenone und Anthracenderivate Verwendung.

Bevorzugte erfindungsgemässe Mittel enthalten Photosensibilisatoren aus den Klassen der Xanthenfarbstoffe, Thioxanthone, Anthrachinone oder Phthalocyanine, insbesondere die bevorzugten Einzelsubstanzen: 3′,4′,5′,6′-Tetrachlor-2,4,5,7-tetrajodfluorescein-Dinatriumsalz, Hydroxy- oder Chloraluminium-phthalocyaninsulfonsäure-Natriumsalze, 1-Amino-4-bromanthrachinon-2-sulfonsäure-Natriumsalz oder Thioxanthon-1-carbonsäure-nonaäthylenglykolester.

Als besonders geeignete Kombinationen von N-Phenylthioharnstoff und Photosensibilisator haben sich die Kombination der Wirkstoffe der Formel I, insbesondere diejenigen, in denen $R_1$ für Phenyl oder einfach durch Halogen, $C_1$-$C_4$-Alkyl oder Trifluormethyl substituiertes Phenyl und $R_2$, $R_3$ und $R_4$ für $C_1$-$C_4$-Alkyl stehen, mit Photosensibilisatoren aus den Stoffklassen der Xanthenfarbstoffe, Thioxanthone, Anthrachinone oder Phthalocyanine erwiesen.

Auf Grund des gezeitigten biologischen Effekts sind solche Mittel besonders erwähnenswert, die als insektiziden und akariziden Wirkstoff N-(2,6-Diisopropyl-4-phenoxyphenyl)-N′-tert.butyl-thioharnstoff und als Photosensibilisator entweder 3′,4′,5′,6′-Tetrachlor-2,4,5,7-tetrajodfluorescein-Dinatriumsalz oder Hydroxyaluminium-phthalocyaninsulfonsäure-Natriumsalz enthalten.

Handelsfähige Mittel der bevorzugten Ausführungsform liegen im allgemeinen in Form eines Spritzpulvers oder Suspensionskonzentrates vor, das als Wirkstoffe einerseits 1 bis 50 Gewichts-% N-(2,6-Diisopropyl-4-phenoxy-phenyl)-N′-tert.butyl-thioharnstoff mit einer mittleren Korngrösse von 2 µm bis 8 µm

und andererseits 0,1 bis 10 Mol-% 3',4',5',6'-Tetrachlor-2,4,5,7-tetrajodfluorescein-Dinatriumsalz oder Hydroxyaluminiumphthalocyanin-sulfonsäure-Natriumsalz, bezogen auf die Menge des aktiven Thioharnstoffs enthält.

Als feste Trägerstoffe für dispergierbare Pulver und Suspensionskonzentrate werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäuren oder hochdisperse saugfähige Polymerisate zugesetzt werden. Als gekörnte, adsorptive Trägerstoffe kommen poröse Typen, wie zum Beispiel Bimsstein, Ziegelbruch, Sepiolit oder Bentonit, als nicht sorptive Trägermaterialien zum Beispiel Calcit oder Sand in Frage. Darüberhinaus kann eine Vielzahl von granulierten Materialien anorganischer oder organischer Natur, wie insbesondere Dolomit oder zerkleinerte Pflanzenrückstände, verwendet werden. Als oberflächenaktive Verbindungen kommen nichtionogene, kation- und/oder anionaktive Tenside mit guten Emulgier-, Dispergier- und Netzeigenschaften in Betracht. Unter Tensiden sind auch Tensidgemische zu verstehen. Geeignete anionische Tenside können sowohl sogenannte wasserlösliche Seifen als auch wasserlösliche synthetische oberflächenaktive Verbindungen sein. Als Seifen eignen sich die Alkali-, Erdalkali- oder gegebenenfalls substituierten Ammoniumsalze von höheren Fettsäuren ($C_{10}$-$C_{22}$), wie zum Beispiel die Natrium- oder Kalium-Salze der Oel- oder Stearinsäure, oder von natürlichen Fettsäuregemischen, die beispielsweise aus Kokosnuss-oder Tallöl gewonnen werden können. Ferner sind als Tenside auch die Fettsäure-methyltaurin-salze sowie modifizierte und nicht modifizierte Phospholipide zu erwähnen. Häufiger werden jedoch sogenannte synthetische Tenside verwendet, insbesondere Fettsulfonate, Fettsulfate, sulfonierte Benzimidazolderivate oder Alkylarylsulfonate. Die Fettsulfonate oder -sulfate liegen in der Regel als Alkali-, Erdalkali- oder gegebenenfalls substituierte Ammoniumsalze vor und weisen im allgemeinen einen Alkylrest mit 8 bis 22 Kohlenstoffatomen auf, wobei Alkyl auch den Alkylteil von Acylresten einschliesst, zum Beispiel das Natrium- oder Calcium-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxid-Addukten. Die sulfonierten Benzimidazolderivate enthalten vorzugsweise 2 Sulfonsäuregruppen und einen Fettsäurerest mit etwa 8-22 Kohlenstoffatomen. Alkylarylsulfonate sind zum Beispiel die Natrium-, Calcium- oder Triäthanolaminsalze der Dodecylbenzolsulfonsäure, der Dibutylnaphthalinsulfonsäure oder eines Naphthalinsulfonsäure-Formaldehydkondensationsproduktes. Ferner kommen auch entsprechende Phosphate, wie zum Beispiel Salze des Phosphorsäureesters eines p-Nonylphenol-(4-14)-Aethylenoxid-Adduktes, in Frage. Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können. Weiterhin geeignete nichtionische Tenside sind die wasserlöslichen 20 bis 250 Aethylenglykoläthergruppen und 10 bis 100 Propylenglykolläthergruppen enthaltenden Polyäthylenoxid-Addukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykoleinheiten. Als Beispiele nichtionischer Tenside seien Nonylphenolpolyäthoxyäthanole, Ricinusölpolyglykoläther, Polypropylen-Polyäthylenoxid-Addukte, Tributylphenoxypolyäthoxyäthanol, Polyäthylenglykol und Oktylphenoxypolyäthoxyäthanol erwähnt. Ferner kommen auch Fettsäureester von Polyoxyäthylensorbitan, wie das Polyoxyäthylensorbitan-trioleat in Betracht. Bei den kationischen Tensiden handelt es sich vor allem um quaternäre Ammoniumsalze, welche als N-Substituenten mindestens einen Alkylrest mit 8 bis 22 Kohlenstoffatomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, beispielsweise das Stearyltrimethylammoniumchlorid oder das Benzy-di-(2-chloräthyl)-äthylammoniumbromid.

Die in der Formulierungstechnik gebräuchlichen Tenside sind u.a. in folgenden Publikationen beschrieben:

"1985 International Mc Cutcheon's Emulsifiers & Detergents", Glen Rock, NJ, USA, 1985",
H. Stache, "Tensid-Taschenbuch", 2. Aufl., C. Hanser Verlag München, Wien 1981,
M. and J. Ash. "Encyclopedia of Surfactants", Vol. I-III, Chemical Publishing Co., New York, 1980-1981.

Insbesondere setzen sich bevorzugte erfindungsgemässe Formulierungen folgendermassen zusammen:
(% = Gewichtsprozent)

Suspension-Konzentrate (Flowables)

Gemisch aus Wirkstoff der Formel I und
Photosensibilisator: 1 bis 75 %, vorzugsweise 10 bis 50 %
Wasser: 24 bis 98 %, vorzugsweise 30 bis 88 %

oberflächenaktives Mittel: 1 bis 40 %, vorzugsweise 2 bis 30 %
Benetzbare Pulver (Spritzpulver)
Gemisch aus Wirkstoff der Formel I und
Photosensibilisator: 1 bis 75 %, vorzugsweise 10 bis 50 %
oberflächenaktives Mittel: 1 bis 30 %, vorzugsweise 10 bis 85 %
festes Trägermaterial: 5 bis 98 %, vorzugsweise 25 bis 80 %

Die folgenden Beispiele dienen der Erläuterung der Erfindung. Sie schränken die Erfindung nicht ein.

## Biologische Beispiele

### Beispiel B1: Verbesserung der Initialwirkung

Aus Buschbohnenblättern im 2-Blattstadium (Sorte "Autan") werden kreisförmige Blattscheiben von 5 cm Durchmesser ausgeschnitten. Diese Scheiben werden auf eine Lage feuchter Watte in Petrischalen plaziert und mit je 10 adulten Weibchen der gemeinen Spinnmilbe (Tetranychus urticae) besiedelt. Die besiedelten Blattscheiben werden mit Spritzbrühen, welche die zu prüfenden Wirkstoffe in den gewünschten Konzentrationen enthalten, besprüht. Die Spritzbrühen werden hergestellt, indem man durch Verdünnen von Spritzpulvern oder Suspensionskonzentraten mit Wasser die Anwendungskonzentration einstellt und den Photosensibilisator in der gewünschten Menge darin auflöst. Die Versuche werden 2, 4, 6 und 24 Stunden nach der Applikation ausgewertet, indem die Mortalität der behandelten Schädlinge festgestellt wird. Die Versuche wurden bei +26° C, einer relativen Luftfeuchtigkeit von 50-60 % und einer Beleuchtungsstärke von 8000-10000 Lux durchgeführt.

Testergebnisse:
Testorganismus: Tetranychus urticae, Weibchen, auf Buschbohnenblattscheiben
Testsubstsanzen: Verbindung 1a, Korngrössen 3,8 µm und 7,1 µm
Photosensibilisator: Verbindung II
Konzentrationen: Verbindung 1a: 400 ppm
Verbindung II: 1 Mol-% (ca. 10 ppm)
Auswertung: 2, 4, 6, 24 Stunden nach Applikation

| Verbindung | Mortalität in % nach | | | |
|---|---|---|---|---|
| | 2h | 4h | 6h | 24h |
| Verbindung 1a (3,8 µm) | 0 | 0 | 15 | 100 |
| Verbindung 1a (3,8 µm) + Verbindung II | 0 | 11 | 100 | 100 |
| Verbindung 1a (7,1 µm) | 0 | 0 | 7 | 93 |
| Verbindung 1a (7,1 µm) + Verbindung II | 0 | 4 | 85 | 100 |

Durch Zusatz von 1 Mol-% Photosensibilisator der Formel II wird der Zeitraum bis zum Wirkungseintritt der Verbindung 1a µm ungefähr 18 Stunden verkürzt.

### Beispiel B2: Verbesserung der Wirksamkeit bei verminderten Anwendungskonzentrationen

Aus Buschbohnenblättern im 2-Blattstadium (Sorte "Autan") werden kreisförmige Blattscheiben von 5 cm Durchmesser ausgeschnitten. Diese Scheiben werden auf eine Lage feuchter Watte in Petrischalen plaziert und mit je 10 adulten Weibchen der gemeinen Spinnmilbe (Tetranychus urticae) besiedelt. Die besiedelten Blattscheiben werden mit Spritzbrühen, welche die zu prüfenden Wirkstoffe der Klasse der N-Phenylthioharnstoffe in Konzentrationen von 400, 200, 100, 50 und 25 ppm enthalten, besprüht. Die Spritzbrühen werden durch Verdünnen mit Wasser aus Spritzpulvern oder Suspensionskonzentraten hergestellt und mit der angegebenen Menge Photosensibilisator verrührt. Die Versuche werden 24 Stunden nach der Behandlung ausgewertet, indem die Mortalität der Schädlinge festgestellt wird. Die Versuche wurden bei +26° C, einer relativen Luftfeuchtigkeit von 50-60 % und einer Beleuchtungsstärke von 8000-10000 Lux

durchgeführt.
Testergebnisse:
Testorganismus: Tetranychus urticae, Weibchen, auf Buschbohnenblattscheiben
Testsubstanzen: Verbindung 1a, Korngrössen 3,8 µm und 7,1 µm
Photosensibilisatoren: Verbindungen II, 3a, IV und V
Konzentrationen: Verbindung 1a: 400, 200, 100, 50, 25 ppm
Verbindung II: 1 Mol-%
Verbindung 3a: 5 Mol-%
Verbindung IV: 5 Mol-%
Verbindung V: 5 Mol-%
Auswertung: 24 Stunden nach Applikation

| Verbindung | Mortalität in % bei | | | | |
|---|---|---|---|---|---|
| | 400 ppm | 200 ppm | 100 ppm | 50 ppm | 25 ppm |
| Verbindung 1a (3,8 µm) | 100 | 96 | 81 | 70 | 55 |
| Verbindung 1a (3,8 µm) + Verbindung II | 100 | 100 | 100 | 100 | 92 |
| Verbindung 1a (3,8 µm) + Verbindung 3a | 100 | 100 | 100 | 85 | 56 |
| Verbindung 1a (3,8 µm) + Verbindung IV | 100 | 100 | 100 | 86 | 55 |
| Verbindung 1a (3,8 µm) + Verbindung V | 100 | 100 | 100 | 100 | 100 |
| Verbindung 1a (7,1 µm) | 93 | 46 | 26 | 0 | 0 |
| Verbindung 1a (7,1 µm) + Verbindung II | 100 | 100 | 100 | 36 | 0 |
| Verbindung 1a (7,1 µm) + Verbindung 3a | 100 | 100 | 100 | 50 | 20 |
| Verbindung 1a (7,1 µm) + Verbindung IV | 100 | 100 | 60 | 10 | 4 |
| Verbindung 1a (7,1 µm) + Verbindung V | 100 | 93 | 36 | 10 | 7 |

Bei tiefen Konzentrationen an Wirkstoff der Verbindung 1a, wird durch Zusatz von 1 bis 5 Mol-% Photosensibilisator die pestizide Wirkung deutlich erhöht.

Beispiel B3: Verlängerung der Wirkungsdauer

Buschbohnenpflanzen im 2-Blattstadium (Sorte "Autan") werden mit wässrigen Dispersionen der geprüften pestiziden N-Phenylthioharnstoffe oder mit wässrigen Dispersionen der Mischungen derselben N-Phenylthioharnstoffe mit zugefügtem Photosensibilisator besprüht. Die Spritzbrühen enthalten den N-Phenylthioharnstoff in Konzentrationen von 100 ppm. Nach der Behandlung lässt man den Spritzbelag antrocknen und kultiviert die Pflanzen im Gewächshaus bei +25° C, einer relativen Luftfeuchtigkeit von 50-60 % und einer Beleuchtungszeit von 14 Stunden pro Tag. Jeweils 1, 4, 8, 15 und 25 Tage nach der Spritzbehandlung werden je 2 Pflanzen, weiche nur mit Pestizid und welche mit Pestizid und Photosensibilisatorzusatz behandelt worden sind, mit einer Mischpopulation der Karminspinnmilbe (Tetranychus cinnabarinus) besiedelt. 9 Tage nach der Besiedlung wird der Versuch ausgewertet, indem die Mortalität der Schädlinge festgestellt wird.
Testergebnisse:
Testorganismus: Tetranychus cinnabarinus, Mischpopulation auf Buschbohnen
Testsubstanzen: Verbindung 1a, Korngrössen 1,7 µm
Photosensibilisator: Verbindung 3a
Konzentrationen: Verbindung 1a: 100 ppm
Verbindung 3a: 2 Mol-%
Besiedlung: 1, 4, 8, 15, 25 Tage nach Spritzbehandlung
Auswertung: 9 Tage nach Besiedlung

| Besiedlung in Tagen nach Spritzung | Mortalität in Prozent | |
|---|---|---|
| | Verbindung 1a | Verbindung 1a + 2 Mol % Verbindung 3a |
| 1 | 65 | 100 |
| 4 | 60 | 75 |
| 8 | 25 | 85 |
| 15 | 35 | 73 |
| 25 | 10 | 84 |

Gealterte Spritzbeläge der Verbindung 1a weisen eine deutlich erhöhte pestizide Wirkung auf, wenn sie 2 Mol % Photosensibilisator (Verbindung 3a) enthalten.

Formulierungsbeispiele

Beispiel F1: Suspensionskonzentrate: (% = Gewichtsprozent)

| | |
|---|---|
| a) Verbindung 1a | 40 % |
| Aethylenglykol | 10 % |
| Nonylphenolpolyäthylenglykoläther (15 Mol AeO) | 6 % |
| Na-Ligninsulfonat | 10 % |
| Carboxymethylcellulose | 1 % |
| 37 % wässrige Formaldehydlösung | 0,2 % |
| Silikonöl (75%-ige Emulsion) | 0,8 % |
| Wasser | 32 % |

| | |
|---|---|
| b) Verbindung 1a | 49,87 % |
| Photosensibilisator II | 0,13 % |
| Aethylenglykol | 10 % |
| Nonylphenolpolyäthylenglykoläther (15 Mol AeO) | 6 % |
| Na-Ligninsulfonat | 10 % |
| Carboxymethylcellulose | 1 % |
| 37 % wässrige Formaldehydlösung | 0,2 % |
| Silikonöl (75%-ige Emulsion) | 0,8 % |
| Wasser | 22 % |

| | |
|---|---|
| c) Verbindung 1a | 48,71 % |
| Photosensibilisator II | 1,29 % |
| Aethylenglykol | 10 % |
| Nonylphenolpolyäthylenglykoläther (15 Mol AeO) | 6 % |
| Na-Ligninsulfonat | 10 % |
| Carboxymethylcellulose | 1 % |
| 37 % wässrige Formaldehydlösung | 0,2 % |
| Silikonöl (75%-ige Emulsion) | 0,8 % |
| Wasser | 22 % |

| | |
|---|---|
| d) Verbindung 1a | 44,15 % |
| Photosensibilisator II | 5,85 % |
| Aethylenglykol | 10 % |
| Nonylphenolpolyäthylenglykoläther (15 Mol AeO) | 6 % |
| Na-Ligninsulfonat | 10 % |
| Carboxymethylcellulose | 1 % |
| 37 % wässrige Formaldehydlösung | 0,2 % |
| Silikonöl (75%-ige Emulsion) | 0,8 % |
| Wasser | 22 % |

| | |
|---|---|
| e) Verbindung 1a | 39,54 % |
| Photosensibilisator II | 10,46 % |
| Aethylenglykol | 10 % |
| Nonylphenolpolyäthylenglykoläther (15 Mol AeO) | 6 % |
| Na-Ligninsulfonat | 10 % |
| Carboxymethylcellulose | 1 % |
| 37 % wässrige Formaldehydlösung | 0,2 % |
| Silikonöl (75%-ige Emulsion) | 0,8 % |
| Wasser | 22 % |

| | |
|---|---|
| f) Verbindung 1a | 49,88 % |
| Photosensibilisator 3a | 0,12 % |
| Aethylenglykol | 10 % |
| Nonylphenolpolyäthylenglykoläther (15 Mol AeO) | 6 % |
| Na-Ligninsulfonat | 10 % |
| Carboxymethylcellulose | 1 % |
| wässrige Formaldehydlösung | 0,2 % |
| Silikonöl (75%-ige Emulsion) | 0,8 % |
| Wasser | 22 % |

| | |
|---|---|
| g) Verbindung 1a | 48,84 % |
| Photosensibilisator 3a | 1,16 % |
| Aethylenglykol | 10 % |
| Nonylphenolpolyäthylenglykoläther (15 Mol AeO) | 6 % |
| Na-Ligninsulfonat | 10 % |
| Carboxymethylcellulose | 1 % |
| 37 % wässrige Formaldehydlösung | 0,2 % |
| Silikonöl (75%-ige Emulsion) | 0,8 % |
| Wasser | 22 % |

| | |
|---|---|
| h) Verbindung 1a | 44,70 % |
| Photosensibilisator 3a | 5,30 % |
| Aethylenglykol | 10 % |
| Nonylphenolpolyäthylenglykoläther (15 Mol AeO) | 6 % |
| Na-Ligninsulfonat | 10 % |
| Carboxymethylcellulose | 1 % |
| 37 % wässrige Formaldehydlösung | 0,2 % |
| Silikonöl (75%-ige Emulsion) | 0,8 % |
| Wasser | 22 % |

| | |
|---|---|
| i) Verbindung 1a | 40,41 % |
| Photosensibilisator 3a | 9,59 % |
| Aethylenglykol | 10 % |
| Nonylphenolpolyäthylenglykoläther (15 Mol AeO) | 6 % |
| Na-Ligninsulfonat | 10 % |
| Carboxymethylcellulose | 1 % |
| 37 % wässrige Formaldehydlösung | 0,2 % |
| Silikonöl (75%-ige Emulsion) | 0,8 % |
| Wasser | 22 % |

| | |
|---|---|
| j) Verbindung 1a | 47,50 % |
| Photosensibilisator V | 2,50 % |
| Aethylenglykol | 10 % |
| Nonylphenolpolyäthylenglykoläther (15 Mol AeO) | 5 % |
| Na-Ligninsulfonat | 11 % |
| Carboxymethylcellulose | 1 % |
| 37 % wässrige Formaldehydlösung | 0,2 % |
| Silikonöl (75%-ige Emulsion) | 0,8 % |
| Wasser | 22 % |

| | |
|---|---|
| k) Verbindung 1a | 45 % |
| Photosensibilisator V | 5 % |
| Aethylenglykol | 8 % |
| Nonylphenolpolyäthylenglykoläther (15 Mol AeO) | 6 % |
| Na-Ligninsulfonat | 10 % |
| Carboxymethylcellulose | 1 % |
| 37 % wässrige Formaldehydlösung | 0,2 % |
| Silikonöl (75%-ige Emulsion) | 0,8 % |
| Wasser | 24 % |

| | |
|---|---|
| l) Verbindung 1a | 50 % |
| Aethylenglykol | 8 % |
| Nonylphenolpolyäthylenglykoläther (15 Mol AeO) | 6 % |
| Na-Ligninsulfonat | 8 % |
| Carboxymethylcellulose | 1 % |
| 37 % wässrige Formaldehydlösung | 0,3 % |
| Silikonöl (75%-ige Emulsion) | 0,7 % |
| Wasser | 26 % |

| | |
|---|---|
| m) Verbindung 1a | 50 % |
| Aethylenglykol | 10 % |
| Nonylphenolpolyäthylenglykoläther (15 Mol AeO) | 6 % |
| Na-Ligninsulfonat | 10 % |
| Carboxymethylcellulose | 1 % |
| 37 % wässrige Formaldehydlösung | 0,2 % |
| Silikonöl (75%-ige Emulsion) | 0,8 % |
| Wasser | 22 % |

| | |
|---|---|
| n) Verbindung 1a | 49,35 % |
| Photosensibilisator II | 0,65 % |
| Aethylenglykol | 10 % |
| Nonylphenolpolyäthylenglykoläther (15 Mol AeO) | 6 % |
| Na-Ligninsulfonat | 10 % |
| Carboxymethylcellulose | 1 % |
| 37 % wässrige Formaldehydlösung | 0,2 % |
| Silikonöl (75%-ige Emulsion) | 0,8 % |
| Wasser | 22 % |

| | |
|---|---|
| o) Verbindung 1a | 47,42 % |
| Photosensibilisator II | 2,58 % |
| Aethylenglykol | 10 % |
| Nonylphenolpolyäthylenglykoläther (15 Mol AeO) | 6 % |
| Na-Ligninsulfonat | 10 % |
| Carboxymethylcellulose | 1 % |
| 37 % wässrige Formaldehydlösung | 0,2 % |
| Silikonöl (75%-ige Emulsion) | 0,8 % |
| Wasser | 22 % |

| | |
|---|---|
| p) Verbindung 1a | 49,37 % |
| Photosensibilisator 3a | 0,63 % |
| Aethylenglykol | 10 % |
| Nonylphenolpolyäthylenglykoläther (15 Mol AeO) | 6 % |
| Na-Ligninsulfonat | 10 % |
| Carboxymethylcellulose | 1 % |
| 37 % wässrige Formaldehydlösung | 0,2 % |
| Silikonöl (75%-ige Emulsion) | 0,8 % |
| Wasser | 22 % |

| | |
|---|---|
| q) Verbindung 1a | 47,54 % |
| Photosensibilisator 3a | 2,46 % |
| Aethylenglykol | 10 % |
| Nonylphenolpolyäthylenglykoläther (15 Mol AeO) | 6 % |
| Na-Ligninsulfonat | 10 % |
| Carboxymethylcellulose | 1 % |
| 37 % wässrige Formaldehydlösung | 0,2 % |
| Silikonöl (75%-ige Emulsion) | 0,8 % |
| Wasser | 22 % |

| | |
|---|---|
| r) Verbindung 1a | 50 % |
| 1,2-Propylenglykol | 5 % |
| Aethylenglykol | 0,32 % |
| Silikonöl (30%-ige Emulsion) | 0,5 % |
| Mono- und Di-(tristyrylphenolpolyglykoläther)-phosphorsäureester-triäthanolammoniumsalz-Gemisch (18 Mol AeO) | 1,2 % |
| Polysaccharid | 0,1 % |
| 37 % wässrige Formaldehydlösung | 0,1 % |
| Wasser | 42,78 % |

| | |
|---|---|
| s) Verbindung 1a | 49,87 % |
| Photosensibilisator II | 0,13 % |
| 1,2-Propylenglykol | 5 % |
| Aethylenglykol | 0,32 % |
| Silikonöl (30%-ige Emulsion) | 0,5 % |
| Mono- und Di-(tristyrylphenolpolyglykoläther)-phosphorsäureester-triäthanolammoniumsalz-Gemisch (18 Mol AeO) | 1,2 % |
| Polysaccharid | 0,1 % |
| 37 % wässrige Formaldehydlösung | 0,1 % |
| Wasser | 42,78 % |

| | |
|---|---|
| t) Verbindung 1a | 49,35 % |
| Photosensibilisator II | 0,65 % |
| 1,2-Propylenglykol | 5 % |
| Aethylenglykol | 0,32 % |
| Silikonöl (30%-ige Emulsion) | 0,5 % |
| Mono- und Di-(tristyrylphenolpolyglykoläther)-phosphorsäureester-triäthanolammoniumsalz-Gemisch (18 Mol AeO) | 1,2 % |
| Polysaccharid | 0,1 % |
| 37 % wässrige Formaldehydlösung | 0,1 % |
| Wasser | 42,78 % |

| | |
|---|---|
| u) Verbindung 1a | 48,71 % |
| Photosensibilisator II | 1,29 % |
| 1,2-Propylenglykol | 5 % |
| Aethylenglykol | 0,32 % |
| Silikonöl (30%-ige Emulsion) | 0,5 % |
| Mono- und Di-(tristyrylphenolpolyglykoläther)-phosphorsäureester-triäthanolammoniumsalz-Gemisch (18 Mol AeO) | 1,2 % |
| Polysaccharid | 0,1 % |
| 37 % wässrige Formaldehydlösung | 0,1 % |
| Wasser | 42,78 % |

| | |
|---|---|
| v) Verbindung 1a | 47,42 % |
| Photosensibilisator II | 2,58 % |
| 1,2-Propylenglykol | 5 % |
| Aethylenglykol | 0,32 % |
| Silikonöl (30%-ige Emulsion) | 0,5 % |
| Mono- und Di-(tristyrylphenolpolyglykoläther)-phosphorsäureester-triäthanolammoniumsalz-Gemisch (18 Mol AeO) | 1,2 % |
| Polysaccharid | 0,1 % |
| 37 % wässrige Formaldehydlösung | 0,1 % |
| Wasser | 42,78 % |

| | |
|---|---|
| w) Verbindung 1a | 44,15 % |
| Photosensibilisator II | 5,85 % |
| 1,2-Propylenglykol | 5 % |
| Aethylenglykol | 0,32 % |
| Silikonöl (30%-ige Emulsion) | 0,5 % |
| Mono- und Di-(tristyrylphenolpolyglykoläther)-phosphorsäureester-triäthanolammoniumsalz-Gemisch (18 Mol AeO) | 1,2 % |
| Polysaccharid | 0,1 % |
| 37 % wässrige Formaldehydlösung | 0,1 % |
| Wasser | 42,78 % |

| | |
|---|---|
| x) Verbindung 1a | 49,87 % |
| Photosensibilisator 3a | 0,13 % |
| 1,2-Propylenglykol | 5 % |
| Aethylenglykol | 0,32 % |
| Silikonöl (30%-ige Emulsion) | 0,5 % |
| Mono- und Di-(tristyrylphenolpolyglykoläther)-phosphorsäureester-triäthanolammoniumsalz-Gemisch (18 Mol AeO) | 1,2 % |
| Polysaccharid | 0,1 % |
| 37 % wässrige Formaldehydlösung | 0,1 % |
| Wasser | 42,78 % |

| | |
|---|---|
| y) Verbindung 1a | 48,75 % |
| Photosensibilisator 3a | 1,25 % |
| 1,2-Propylenglykol | 5 % |
| Aethylenglykol | 0,32 % |
| Silikonöl (30%-ige Emulsion) | 0,5 % |
| Mono- und Di-(tristyrylphenolpolyglykoläther)-phosphorsäureester-triäthanolammoniumsalz-Gemisch (18 Mol AeO) | 1,2 % |
| Polysaccharid | 0,1 % |
| 37 % wässrige Formaldehydlösung | 0,1 % |
| Wasser | 42,78 % |

| | |
|---|---|
| z) Verbindung 1a | 49,37 % |
| Photosensibilisator 3a | 0,63 % |
| 1,2-Propylenglykol | 5 % |
| Aethylenglykol | 0,32 % |
| Silikonöl (30%-ige Emulsion) | 0,5 % |
| Mono- und Di-(tristyrylphenolpolyglykoläther)-phosphorsäureester-triäthanolammoniumsalz-Gemisch (18 Mol AeO) | 1,2 % |
| Polysaccharid | 0,1 % |
| 37 % wässrige Formaldehydlösung | 0,1 % |
| Wasser | 42,78 % |

| | |
|---|---|
| aa) Verbindung 1a | 47,54 % |
| Photosensibilisator 3a | 2,46 % |
| 1,2-Propylenglykol | 5 % |
| Aethylenglykol | 0,32 % |
| Silikonöl (30%-ige Emulsion) | 0,5 % |
| Mono- und Di-(tristyrylphenolpolyglykoläther)-phosphorsäureester-triäthanolammoniumsalz-Gemisch (18 Mol AeO) | 1,2 % |
| Polysaccharid | 0,1 % |
| 37 % wässrige Formaldehydlösung | 0,1 % |
| Wasser | 42,78 % |

| | |
|---|---|
| bb) Verbindung 1a | 44,3 % |
| Photosensibilisator 3a | 5,7 % |
| 1,2-Propylenglykol | 5 % |
| Aethylenglykol | 0,32 % |
| Silikonöl (30%-ige Emulsion) | 0,5 % |
| Mono- und Di-(tristyrylphenolpolyglykoläther)-phosphorsäureester-triäthanolammoniumsalz-Gemisch (18 Mol AeO) | 1,2 % |
| Polysaccharid | 0,1 % |
| 37 % wässrige Formaldehydlösung | 0,1 % |
| Wasser | 42,78 % |

Beispiel F2: Spritzpulver (% = Gewichtsprozent)

| | |
|---|---|
| a) Verbindung 1a | 50 % |
| 1-Benzyl-2-heptadecyl-benzimidazoldisulfonsäure-Natriumsalz | 8 % |
| Na-Laurylsulfat | 2 % |
| hochdisperse Kieselsäure | 3 % |
| Kaolin | 37 % |

| | |
|---|---|
| b) Verbindung 1a | 50 % |
| Dibutyl-naphthalinsulfonsäure-Na-Salz | 13 % |
| Oktylphenolpolyäthylenglykoläther (8 Mol AeO) | 5 % |
| Harnstoff-Formaldehyd-Kondensationspolymer | 5 % |
| hochdisperse Kieselsäure | 5 % |
| Kaolin | 22 % |

| | |
|---|---|
| c) Verbindung 1a | 49,87 % |
| Photosensibilisator II | 0,13 % |
| 1-Benzyl-2-heptadecyl-benzimidazoldisulfonsäure-Natriumsalz | 8 % |
| Na-Laurylsulfat | 2 % |
| hochdisperse Kieselsäure | 3 % |
| Kaolin | 37 % |

| | |
|---|---|
| d) Verbindung 1a | 49,87 % |
| Photosensibilisator II | 0,13 % |
| Dibutyl-naphthalinsulfonsäure-Na-Salz | 13 % |
| Oktylphenolpolyäthylenglykoläther (8 Mol AeO) | 5 % |
| Harnstoff-Formaldehyd-Kondensationspolymer | 5 % |
| hochdisperse Kieselsäure | 5 % |
| Kaolin | 22 % |

| | |
|---|---|
| e) Verbindung 1a | 48,71 % |
| Photosensibilisator II | 1,29 % |
| 1-Benzyl-2-heptadecyl-benzimidazoldisulfonsäure-Natriumsalz | 8 % |
| Na-Laurylsulfat | 2 % |
| hochdisperse Kieselsäure | 3 % |
| Kaolin | 37 % |

| | |
|---|---|
| f) Verbindung 1a | 48,71 % |
| Photosensibilisator II | 1,29 % |
| Dibutyl-naphthalinsulfonsäure-Na-Salz | 13 % |
| Oktylphenolpolyäthylenglykoläther (8 Mol AeO) | 5 % |
| Harnstoff-Formaldehyd-Kondensationspolymer | 5 % |
| hochdisperse Kieselsäure | 5 % |
| Kaolin | 22 % |

| | |
|---|---|
| g) Verbindung 1a | 44,15 % |
| Photosensibilisator II | 5,85 % |
| 1-Benzyl-2-heptadecyl-benzimidazoldisulfonsäure-Natriumsalz | 8 % |
| Na-Laurylsulfat | 2 % |
| hochdisperse Kieselsäure | 3 % |
| Kaolin | 37 % |

| | |
|---|---|
| h) Verbindung 1a | 44,15 % |
| Photosensibilisator II | 5,85 % |
| Dibutyl-naphthalinsulfonsäure-Na-Salz | 13 % |
| Oktylphenolpolyäthylenglykoläther (8 Mol AeO) | 5 % |
| Harnstoff-Formaldehyd-Kondensationspolymer | 5 % |
| hochdisperse Kieselsäure | 5 % |
| Kaolin | 22 % |

| | |
|---|---|
| i) Verbindung 1a | 39,54 % |
| Photosensibilisator II | 10,46 % |
| 1-Benzyl-2-heptadecyl-benzimidazoldisulfonsäure-Natriumsalz | 8 % |
| Na-Laurylsulfat | 2 % |
| hochdisperse Kieselsäure | 3 % |
| Kaolin | 37 % |

| | |
|---|---|
| j) Verbindung 1a | 39,54 % |
| Photosensibilisator II | 10,46 % |
| Dibutyl-naphthalinsulfonsäure-Na-Salz | 13 % |
| Oktylphenolpolyäthylenglykoläther (8 Mol AeO) | 5 % |
| Harnstoff-Formaldehyd-Kondensationspolymer | 5 % |
| hochdisperse Kieselsäure | 5 % |
| Kaolin | 22 % |

| | |
|---|---|
| k) Verbindung 1a | 49,88 % |
| Photosensibilisator 3a | 0,12 % |
| 1-Benzyl-2-heptadecyl-benzimidazoldisulfonsäure-Natriumsalz | 8 % |
| Na-Laurylsulfat | 2 % |
| hochdisperse Kieselsäure | 3 % |
| Kaolin | 37 % |

| | |
|---|---|
| l) Verbindung 1a | 49,88 % |
| Photosensibilisator 3a | 0,12 % |
| Dibutyl-naphthalinsulfonsäure-Na-Salz | 13 % |
| Oktylphenolpolyäthylenglykoläther (8 Mol AeO) | 5 % |
| Harnstoff-Formaldehyd-Kondensationspolymer | 5 % |
| hochdisperse Kieselsäure | 5 % |
| Kaolin | 22 % |

| | |
|---|---|
| m) Verbindung 1a | 48,84 % |
| Photosensibilisator 3a | 1,16 % |
| 1-Benzyl-2-heptadecyl-benzimidazoldisulfonsäure-Natriumsalz | 8 % |
| Na-Laurylsulfat | 2 % |
| hochdisperse Kieselsäure | 3 % |
| Kaolin | 37 % |

| | |
|---|---|
| n) Verbindung 1a | 48,84 % |
| Photosensibilisator 3a | 1,16 % |
| Dibutyl-naphthalinsulfonsäure-Na-Salz | 13 % |
| Oktylphenolpolyäthylenglykoläther (8 Mol AeO) | 5 % |
| Harnstoff-Formaldehyd-Kondensationspolymer | 5 % |
| hochdisperse Kieselsäure | 5 % |
| Kaolin | 22 % |

| | |
|---|---|
| o) Verbindung 1a | 44,70 % |
| Photosensibilisator 3a | 5,30 % |
| 1-Benzyl-2-heptadecyl-benzimidazoldisulfonsäure-Natriumsalz | 8 % |
| Na-Laurylsulfat | 2 % |
| hochdisperse Kieselsäure | 3 % |
| Kaolin | 37 % |

| | |
|---|---|
| p) Verbindung 1a | 44,70 % |
| Photosensibilisator 3a | 5,30 % |
| Dibutyl-naphthalinsulfonsäure-Na-Salz | 13 % |
| Oktylphenolpolyäthylenglykoläther (8 Mol AeO) | 5 % |
| Harnstoff-Formaldehyd-Kondensationspolymer | 5 % |
| hochdisperse Kieselsäure | 5 % |
| Kaolin | 22 % |

| | |
|---|---|
| q) Verbindung 1a | 40,41 % |
| Photosensibilisator 3a | 9,59 % |
| 1-Benzyl-2-heptadecyl-benzimidazoldisulfonsäure-Natriumsalz | 8 % |
| Na-Laurylsulfat | 2 % |
| hochdisperse Kieselsäure | 3 % |
| Kaolin | 37 % |

| | |
|---|---|
| r) Verbindung 1a | 40,41% |
| Photosensibilisator 3a | 9,59 % |
| Dibutyl-naphthalinsulfonsäure-Na-Salz | 13 % |
| Oktylphenolpolyäthylenglykoläther (8 Mol AeO) | 5 % |
| Harnstoff-Formaldehyd-Kondensationspolymer | 5 % |
| hochdisperse Kieselsäure | 5 % |
| Kaolin | 22 % |

| | |
|---|---|
| s) Verbindung 1a | 49,95 % |
| Photosensibilisator IV | 0,05 % |
| 1-Benzyl-2-heptadecyl-benzimidazoldisulfonsäure-Natriumsalz | 8 % |
| Na-Laurylsulfat | 2 % |
| hochdisperse Kieselsäure | 3 % |
| Kaolin | 37 % |

| | |
|---|---|
| t) Verbindung 1a | 49,95 % |
| Photosensibilisator IV | 0,05 % |
| Dibutyl-naphthalinsulfonsäure-Na-Salz | 13 % |
| Oktylphenolpolyäthylenglykoläther (8 Mol AeO) | 5 % |
| Harnstoff-Formaldehyd-Kondensationspolymer | 5 % |
| hochdisperse Kieselsäure | 5 % |
| Kaolin | 22 % |

| | |
|---|---|
| u) Verbindung 1a | 49,50 % |
| Photosensibilisator IV | 0,50 % |
| 1-Benzyl-2-heptadecyl-benzimidazoldisulfonsäure-Natriumsalz | 8 % |
| Na-Laurylsulfat | 2 % |
| hochdisperse Kieselsäure | 3 % |
| Kaolin | 37 % |

| | |
|---|---|
| v) Verbindung 1a | 49,50 % |
| Photosensibilisator IV | 0,50 % |
| Dibutyl-naphthalinsulfonsäure-Na-Salz | 13 % |
| Oktylphenolpolyäthylenglykoläther (8 Mol AeO) | 5 % |
| Harnstoff-Formaldehyd-Kondensationspolymer | 5 % |
| hochdisperse Kieselsäure | 5 % |
| Kaolin | 22 % |

| | |
|---|---|
| w) Verbindung 1a | 47,50 % |
| Photosensibilisator IV | 2,50 % |
| 1-Benzyl-2-heptadecyl-benzimidazoldisulfonsäure-Natriumsalz | 8 % |
| Na-Laurylsulfat | 2 % |
| hochdisperse Kieselsäure | 3 % |
| Kaolin | 37 % |

| | |
|---|---|
| x) Verbindung 1a | 47,50 % |
| Photosensibilisator IV | 2,50 % |
| Dibutyl-naphthalinsulfonsäure-Na-Salz | 13 % |
| Oktylphenolpolyäthylenglykoläther (8 Mol AeO) | 5 % |
| Harnstoff-Formaldehyd-Kondensationspolymer | 5 % |
| hochdisperse Kieselsäure | 5 % |
| Kaolin | 22 % |

| | |
|---|---|
| y) Verbindung 1a | 45 % |
| Photosensibilisator IV | 5 % |
| 1-Benzyl-2-heptadecyl-benzimidazoldisulfonsäure-Natriumsalz | 8 % |
| Na-Laurylsulfat | 2 % |
| hochdisperse Kieselsäure | 3 % |
| Kaolin | 37 % |

| | |
|---|---|
| z) Verbindung 1a | 45 % |
| Photosensibilisator IV | 5 % |
| Dibutyl-naphthalinsulfonsäure-Na-Salz | 13 % |
| Oktylphenolpolyäthylenglykoläther (8 Mol AeO) | 5 % |
| Harnstoff-Formaldehyd-Kondensationspolymer | 5 % |
| hochdisperse Kieselsäure | 5 % |
| Kaolin | 22 % |

| | |
|---|---|
| aa) Verbindung 1a | 47,42 % |
| Photosensibilisator II | 2,58 % |
| 1-Benzyl-2-heptadecyl-benzimidazoldisulfonsäure-Natriumsalz | 8 % |
| Na-Laurylsulfat | 2 % |
| hochdisperse Kieselsäure | 3 % |
| Kaolin | 37 % |

| | |
|---|---|
| bb) Verbindung 1a | 47,42 % |
| Photosensibilisator II | 2,58 % |
| Dibutyl-naphthalinsulfonsäure-Na-Salz | 13 % |
| Oktylphenolpolyäthylenglykoläther (8 Mol AeO) | 5 % |
| Harnstoff-Formaldehyd-Kondensationspolymer | 5 % |
| hochdisperse Kieselsäure | 5 % |
| Kaolin | 22 % |

| | |
|---|---|
| cc) Verbindung 1a | 49,35 % |
| Photosensibilisator II | 0,65 % |
| 1-Benzyl-2-heptadecyl-benzimidazoldisulfonsäure-Natriumsalz | 8 % |
| Na-Laurylsulfat | 2 % |
| hochdisperse Kieselsäure | 3 % |
| Kaolin | 37 % |

| | |
|---|---|
| dd) Verbindung 1a | 49,35 % |
| Photosensibilisator II | 0,65 % |
| Dibutyl-naphthalinsulfonsäure-Na-Salz | 13 % |
| Oktylphenolpolyäthylenglykoläther (8 Mol AeO) | 5 % |
| Harnstoff-Formaldehyd-Kondensationspolymer | 5 % |
| hochdisperse Kieselsäure | 5 % |
| Kaolin | 22 % |

| | |
|---|---|
| ee) Verbindung 1a | 49,37 % |
| Photosensibilisator 3a | 0,63 % |
| 1-Benzyl-2-heptadecyl-benzimidazoldisulfonsäure-Natriumsalz | 8 % |
| Na-Laurylsulfat | 2 % |
| hochdisperse Kieselsäure | 3 % |
| Kaolin | 37 % |

| | |
|---|---|
| ff) Verbindung 1a | 49,37 % |
| Photosensibilisator 3a | 0,63 % |
| Dibutyl-naphthalinsulfonsäure-Na-Salz | 13 % |
| Oktylphenolpolyäthylenglykoläther (8 Mol AeO) | 5 % |
| Harnstoff-Formaldehyd-Kondensationspolymer | 5 % |
| hochdisperse Kieselsäure | 5 % |
| Kaolin | 22 % |

| | |
|---|---|
| gg) Verbindung 1a | 47,54 % |
| Photosensibilisator 3a | 2,46 % |
| 1-Benzyl-2-heptadecyl-benzimidazoldisulfonsäure-Natriumsalz | 8 % |
| Na-Laurylsulfat | 2 % |
| hochdisperse Kieselsäure | 3 % |
| Kaolin | 37 % |

| | |
|---|---|
| hh) Verbindung 1a | 47,54 % |
| Photosensibilisator 3a | 2,46 % |
| Dibutyl-naphthalinsulfonsäure-Na-Salz | 13 % |
| Oktylphenolpolyäthylenglykoläther (8 Mol AeO) | 5 % |
| Harnstoff-Formaldehyd-Kondensationspolymer | 5 % |
| hochdisperse Kieselsäure | 5 % |
| Kaolin | 22 % |

**Ansprüche**

1. Insektizides und akarizides Mittel mit verbesserter Wirkung, dadurch gekennzeichnet, dass es neben

einem geeigneten wasserunlöslichen Trägermaterial und/oder Zuschlagstoff als Wirkstoffe einerseits einen insektizid und akarizid wirkenden N-Phenylthioharnstoff und andererseits einen Photosensibilisator enthält.

2. Mittel gemäss Anspruch 1, dadurch gekennzeichnet, dass es als Wirkstoff einen N-Phenyl-thioharnstoff der Formel I

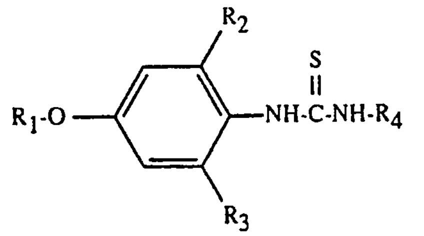

(I)

enthält, worin

$R_1$ Phenyl, Pyridyl oder durch ein oder zwei Substituenten aus der Gruppe Halogen, $C_1$-$C_4$-Alkyl, Trifluormethyl oder Nitro substituiertes Phenyl oder Pyridyl,

$R_2$ und $R_3$ unabhängig voneinander $C_1$-$C_4$-Alkyl und

$R_4$ $C_1$-$C_{10}$-Alkyl, $C_3$-$C_5$-Alkenyl, $C_3$-$C_6$-Cycloalkyl oder $C_3$-$C_6$-Cycloalkyl-$C_1$-$C_4$-alkyl bedeuten.

3. Mittel gemäss Anspruch 2, dadurch gekennzeichnet, dass $R_1$ für Phenyl oder einfach durch Halogen, Alkyl oder Trifluormethyl substituiertes Phenyl und $R_2$, $R_3$ und $R_4$ für $C_1$-$C_4$-Alkyl stehen.

4. Mittel gemäss Anspruch 1, dadurch gekennzeichnet, dass es als insektiziden und akariziden Wirkstoff die Verbindung N-(2,6-Diisopropyl4-phenoxyphenyl)-N′-tert.butylthioharnstoff enthält.

5. Mittel gemäss Anspruch 1, dadurch gekennzeichnet, dass es einen Photosensibilisator aus den Verbindungsklassen der Xanthenfarbstoffe, Thiazine, Porphyrine, Thionine, Eosine, Erythrosine, Phenosafranine, Chlorophylle, Flavine, Thioxanthone, Phthalocyanine, Thiophene, Naphthalinderivate, Phenothiazine, Pyrazolanthrone, Ketocumarine, Azine, Riboflavine, Anthrachinone, Metallozene, Benzophenone und Anthracenderivate enthält.

6. Mittel gemäss Anspruch 1, dadurch gekennzeichnet, dass es einen Photosensibilisator aus den Klassen der Xanthenfarbstoffe, Thioxanthone, Anthrachinone oder Phthalocyanine enthält.

7. Mittel gemäss Anspruch 1, dadurch gekennzeichnet, dass es als Photosensibilisator 3′,4′,5′,6′-Tetrachlor-2,4,5,7-tetrajodfluorescein-Dinatriumsalz, Hydroxyaluminiumphthalocyanin-sulfonsäure-Natriumsalz, 1-Amino-4-bromanthrachinon-2-sulfonsäure-Natriumsalz oder Thioxanthon-1-carbonsäure-nonaäthylenglykolester enthält.

8. Mittel gemäss Anspruch 2, dadurch gekennzeichnet, dass es als Photosensibilisatoren Verbindungen aus den Stoffklassen der Xanthenfarbstoffe, Thioxanthone, Anthrachinone oder Phthalocyanine enthält.

9. Mittel gemäss Anspruch 8, dadurch gekennzeichnet, dass es als insektizide und akarizide Wirkstoffe Verbindungen der Formel I enthält, worin $R_1$ für Phenyl oder einfach durch Halogen, Alkyl oder Trifluormethyl substituiertes Phenyl und $R_2$, $R_3$ und $R_4$ für $C_1$-$C_4$-Alkyl stehen.

10. Mittel gemäss Anspruch 1, dadurch gekennzeichnet, dass es als insektiziden und akaraziden Wirkstoff N-(2,6-Diisopropyl-4-phenoxyphenyl)-N′-tert.butyl-thioharnstoff und als Photosensibilisator 3′,4′,5′,6′-Tetrachlor-2,4,5,7-tetrajodfluorescein-Dinatriumsalz enthält.

11. Mittel gemäss Anspruch 1, dadurch gekennzeichnet, dass es als insektizider und akarizider Wirkstoff N-(Diisopropyl-4-phenoxyphenyl)-N′-tert.butylthioharnstoff und als Photosensibilisator Hydroxyaluminium-phthalocyanin-sulfonsäure-Natriumsalz enthält.

12. Mittel gemäss Anspruch 1, dadurch gekennzeichnet, dass es in Form eines Spritzpulvers oder Suspensionskonzentrates vorliegt.

13. Mittel gemäss Anspruch 1, dadurch gekennzeichnet, dass es in Form eines Spritzpulvers oder Suspensionskonzentrates vorliegt, das als Wirkstoff einerseits 1 bis 50 Gewichts-% N-(2,6-Diisopropyl-4-phenoxyphenyl)-N′-tert.butyl-thioharnstoff mit einer mittleren Korngrösse von 2 µm bis 8 µm und andererseits 0,1 bis 10 Mol.-% 3′,4′,5′,6′-Tetrachlor-2,4,5,7-tetrajodfluorescein-Dinatriumsalz oder Hydroxyaluminium-phthalocyanin-sulfonsäure-Natriumsalz, bezogen auf die Menge des aktiven Thioharnstoffs, enthält.

14. Mittel gemäss Anspruch 1, dadurch gekennzeichnet, dass es in Form eines Spritzpulvers der Zusammensetzung 48,71 % N(2,6-Diisopropyl-4-phenoxy-phenyl)-N′-tert.butyl-thioharnstoff, 1,29 % 3′,4′,5′,6′-Tetrachlor-2-,4,5,7-tetrajodfluorescein-Dinatriumsalz, 13 % Dibutyl-naphthalin-sulfonsäure-Natriumsalz, 5 % Oktylphenolpolyäthylenglykoläther (8 Mol AeO), 5 % gemahlenes Harnstofformaldehyd-Kondensationspolymer, 5 % hochdisperse Kieselsäure und 22 % Kaolin vorliegt.

15. Mittel gemäss Anspruch 1, dadurch gekennzeichnet, dass es in Form eines Spritzpulvers der Zusammensetzung 44,70 % N-(2,6-Diisopropyl-4-phenoxy-phenyl)-N′-tert.butyl-thioharnstoff, 5,30 % Hydroxyaluminiu-phthalocyanin-sulfonsäure-Natriumsalz, 13 % Dibutyl-naphthalinsulfonsäure-Natriumsalz, 5 % Oktylphenolpolyäthylenglykoläther (8 Mol AeO), 5 % gemahlenes Harnstoff-Formaldehyd-Kondensationspolymer, 5 % hochdisperse Kieselsäure und 22 % Kaolin vorliegt.

16. Mittel gemäss Anspruch 1, dadurch gekennzeichnet, dass es in Form eines Spritzpulvers der Zusammensetzung 47,50 % N-(2,6-Diisopropyl-4-phenoxyphenyl)-N′-tert.butyl-thioharnstoff, 2,50 % 1-Amino-4-bromanthrachinon-2-sulfonsäure-Natriumsalz, 13 % Dibutyl-naphthalinsulfonsäure-Natriumsalz, 5 % Oktylphenolpolyäthylenglykoläther (8 Mol AeO), 5 % gemahlenes Harnstoff-Formaldehyd-Kondensationspolymer, 5 % hochdisperse Kieselsäure und 22 % Kaolin vorliegt.

17. Mittel gemäss Anspruch 1, dadurch gekennzeichnet, dass es in Form eines Suspensionskonzentrates der Zusammensetzung 47,54 % N-(2,6-Diisopropyl-4-phenoxyphenyl)-N′-tert.butyl-thioharnstoff, 2,46 % Hydroxyaluminium-phthalocyanin-sulfonsäure-Natriumsalz, 5 % 1,2-Propylenglykol, 0,32 % Aethylenglykol, 0,5 % einer 30%igen Emulsion von Silikonöl, 1,2 % Mono- und Di-(tristyrylphenolpolyglykoläther)-phosphorsäureester-triäthanolammoniumsalz-Gemisch (18 Mol AeO), 0,1 % Polysaccharid, 0,1 % einer 37%igen wässrigen Formaldehydlösung und 42,78 % Wasser vorliegt.

18. Verfahren zum Verbessern der Wirkung eines insektiziden und akariziden Wirkstoffs aus der Klasse der N-Phenylthioharnstoffe, dadurch gekennzeichnet, dass man am gleichen Anwendungsort und zum gleichen Anwendungszeitpunkt einen Photosensibilisator appliziert.

19. Verfahren gemäss Anspruch 18, dadurch gekennzeichnet, dass der N-Phenylthioharnstoff die Formel I

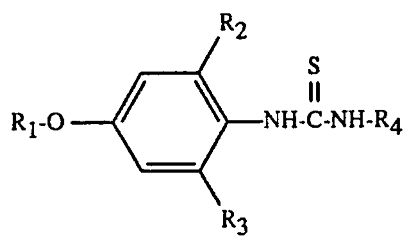

(I)

hat, worin

$R_1$ Phenyl, Pyridyl oder durch ein oder zwei Substituenten aus der Gruppe Halogen, $C_1$-$C_4$-Alkyl, Trifluormethyl oder Nitro substituiertes Phenyl oder Pyridyl,

$R_2$ und $R_3$ unabhängig voneinander $C_1$-$C_4$-Alkyl und

$R_4$ $C_1$-$C_{10}$-Alkyl, $C_3$-$C_5$-Alkenyl, $C_3$-$C_6$-Cycloalkyl oder $C_3$-$C_6$-Cycloalkyl-$C_1$-$C_4$-alkyl bedeuten.

20. Verfahren gemäss Anspruch 18, dadurch gekennzeichnet, dass die Photosensibilisatoren aus den Verbindungsklassen der Xanthenfarbstoffe, Thiazine, Porphyrine, Thionine, Eosine, Erythrosine, Phenosafranine, Chlorophylle, Flavine, Thioxanthone, Phthalocyanine, Thiophene, Naphthalinderivate, Phenothiazine, Pyrazolanthrone, Ketocumarine, Azine, Riboflavine, Anthrachinone, Metallozene, Benzophenone und Anthracenderivate ausgewählt sind.

21. Verfahren gemäss Anspruch 18, dadurch gekennzeichnet, dass der Photosensibilisator im Verhältnis zum N-Phenyl-thioharnstoff in 0,01 bis 50 Mol-Prozent eingesetzt wird.

22. Verfahren gemäss Anspruch 18, dadurch gekennzeichnet, dass der N-Phenylthioharnstoff in Konzentrationen zwischen 0,1 und 1000 ppm auf die behandelten Kulturpflanzen oder Kulturflächen ausgebracht wird.

23. Verfahren gemäss Anspruch 18 zum Zweck des Verkürzens des Zeitraums zwischen Anwendung des N-Phenylthioharnstoffs und dem Eintritt der pestiziden Wirkung.

24. Verfahren gemäss Anspruch 18 zum Zweck des Verlängerns der insektiziden und akariziden Wirkung eines N-Phenylthioharnstoffs.

25. Verfahren gemäss Anspruch 18 zum Zweck der Wirkungssteigerung von N-Phenylthioharnstoffen bei geringen Aufwandmengen.

Europäisches Patentamt

# EUROPÄISCHER RECHERCHENBERICHT

Nummer der Anmeldung

EP 90 81 0235

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | BRIGHTON CROP PROTECTION CONFERENCE - PESTS AND DISEASES, Nr. 1, 1988, Seiten 25-32, British Crop Protection Councel, Thornton Health, GB; H.P. STREIBERT et al.: "CGA 106630 - A new type of acaricide/insecticide for the control of the sucking pest complex in cotton and other crops"<br>* Insgesamt * | 1-25 | A 01 N 47/30 //<br>(A 01 N 47/30<br>A 01 N 43:713<br>A 01 N 43:18<br>A 01 N 43:16<br>A 01 N 41:04 ) |
| A | EP-A-0 146 059 (STERLING DRUG INC.)<br>* Seiten 1-7 * | 1-25 | |
| A | DE-A-3 006 886 (ASAHI-DOW LTD)<br>* Seite 6, Zeilen 1-9; Seite 7, Zeilen 23-32; Seite 8, Zeilen 20-29; Seite 14, Zeilen 3-29; Seite 15, Zeilen 12-14; Seite 24, Zeilen 4-15; Seite 35; Seite 50, Beispiel 21 * | 1-25 | |
| A | FR-A-2 223 356 (FARBWERKE HOECHST AG)<br>* Seite 1, Zeilen 1-3,35-39; Seite 2, Zeilen 28-36; Beispiele 2,4,5,7,9; Ansprüche 1,5 * | 1-25 | RECHERCHIERTE SACHGEBIETE (Int. Cl.5)<br>A 01 N |
| A | FR-A-2 168 186 (DYNACHIM, S.a.R.L.)<br>* Seite 1, Zeile 1-4; Seite 1, Zeile 31 - Seite 3, Zeile 9 * | 1-25 | |

Der vorliegende Recherchenbericht wurde für alle Patentansprüche erstellt

| Recherchenort | Abschlußdatum der Recherche | Prüfer |
|---|---|---|
| DEN HAAG | 28-06-1990 | MUELLNERS W. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)